# EUROPÄISCHE PATENTANMELDUNG

(11) **EP 1 174 990 A2**
(43) Veröffentlichungstag der Anmeldung: **23.01.2002**
(21) Anmeldenummer: 01112656.2
(22) Anmeldetag: 25.05.2001
(51) Int. Cl.: H02K 41/02

(54) **Linearführung für elektrische Linearmotoren**

(30) Priorität: 20.06.2000 DE 10030229
(71) Anmelder: Gebr. Heller Maschinenfabrik GmbH, D-72622 Nürtingen (DE)
(72) Erfinder: Klenk, Rolf, D-72663 Grossbettlingen (DE); Gneiting, Ulrich, D-72636 Frickenhausen (DE); Liebrich, Wolfgang, D-73110 Hattenhofen (DE)
(74) Vertreter: Jackisch-Kohl, Anna-Katharina

(57) **Zusammenfassung**

Die Linearführung hat eine an einem Führungsteil (2) vorgesehene Führungsschiene (3, 4), längs der ein Träger (5) verschiebbar ist. Um die Linearführung so auszubilden, daß sie eine hervorragende Form- und Lagegenauigkeit gewährleistet, weist der Träger (5) wenigstens eine Führungsschiene (3, 4) auf. Das Führungsteil (2) und der Träger (5) haben jeweils ein mit den Führungsschienen (3, 4; 28, 29) zusammenwirkendes Führungslager (9, 10; 21, 22). Bei dieser Linearführung werden Abweichungen von der geradlinigen Bewegung vollständig vermieden, auch wenn der Träger (5) teilweise über das Führungsteil (2) ragt. Dadurch wird die Fertigungsgenauigkeit der Maschine erheblich gesteigert.

## Beschreibung

Die Erfindung betrifft eine Linearführung für elektrische Linearmotoren nach dem Oberbegriff des Anspruches 1.

Die Erzeugung geradliniger Bewegungen gehört zu den Hauptaufgaben im Maschinenbau. Insbesondere im Werkzeugmaschinenbau sind Geradführungen mit den entsprechenden Antrieben zur Ausführung von Schnitt- und Vorschubbewegungen von Werkzeug- und Werkstückträgern, wie Schlitten, Traghülsen und Pinolen, unentbehrlich. Fortschritte in der Signal- und Leistungselektronik sowie in der Motorenentwicklung machten in den letzten Jahren Linearmotoren als Antriebe technisch sinnvoll. Unter Verzicht auf elektromechanische Zwischenglieder, wie Gewinde- oder Zahntriebe, sind sehr hohe Beschleunigungen und Endgeschwindigkeiten realisierbar. Aufgrund der magnetischen Eigenschaften der Linearantriebe müssen die Führungselemente jedoch außer den Gewichts- und Bearbeitungskräften zusätzliche Magnetkräfte aufnehmen. In bestimmten Fällen, wenn der Schlitten teilweise über die Schlittenführung ragt, ergeben sich dadurch Biegekräfte, die die Form- und Lagegenauigkeit ungünstig beeinflussen.

Der Erfindung liegt die Aufgabe zugrunde, die gattungsgemäße Linearführung so auszubilden, daß sie eine hervorragende Form- und Lagegenauigkeit gewährleistet.

Diese Aufgabe wird bei der gattungsgemäßen Linearführung erfindungsgemäß mit den kennzeichnenden Merkmalen des Anspruches 1 gelöst.

Infolge der erfindungsgemäßen Ausbildung werden die durch die Biegung infolge der Magnetkräfte hervorgerufenen Abweichungen von der geradlinigen Bewegung vollständig vermieden, auch wenn der Träger teilweise über das Führungsteil ragt. Dadurch wird die Fertigungsgenauigkeit einer mit der erfindungsgemäßen Linearführung ausgerüsteten Maschine erheblich gesteigert.

Eine hohe Form- und Lagegenauigkeit der Linearführung wird erfindungsgemäß auch dadurch erreicht, daß das Eintauchen von mit Dauer- oder Elektromagneten bestückten Bauelementen in den Arbeitsraum vermieden wird, wo diese sich bei der Bearbeitung ferromagnetischer Werkstoffe mit Spänen zusetzen.

Bei einer anderen Lösung umgreift das Führungsteil den Träger im Bereich der Linearführung, wobei das Primärteil am Führungsteil oder am Träger und das Sekundärteil entsprechend am Träger oder am Führungsteil angeordnet ist. Das Führungsteil kann so ausgebildet sein, daß es die starken magnetischen Anziehungskräfte zwischen dem Primär- und dem Sekundärteil aufnehmen kann, ohne daß eine unzulässige Verformung des Bewegungsspaltes zwischen dem Primär- und dem Sekundärteil zu befürchten ist. Der Träger selbst kann gewichtsmäßig leicht ausgebildet sein, so daß er mit hoher Beschleunigung bzw. Verzögerung verfahren werden kann.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in Draufsicht eine erfindungsgemäße Linearführung,
- Fig. 2: eine Seitenansicht der erfindungsgemäßen Linearführung,
- Fig. 3: eine Vorderansicht der erfindungsgemäßen Linearführung,
- Fig. 4: in Vorderansicht einen Teil einer Maschine mit einer zweiten Ausführungsform einer erfindungsgemäßen Linearführung,
- Fig. 5: eine Seitenansicht der Maschine gemäß Fig. 4,
- Fig. 6: eine Draufsicht auf die Maschine gemäß Fig. 4.

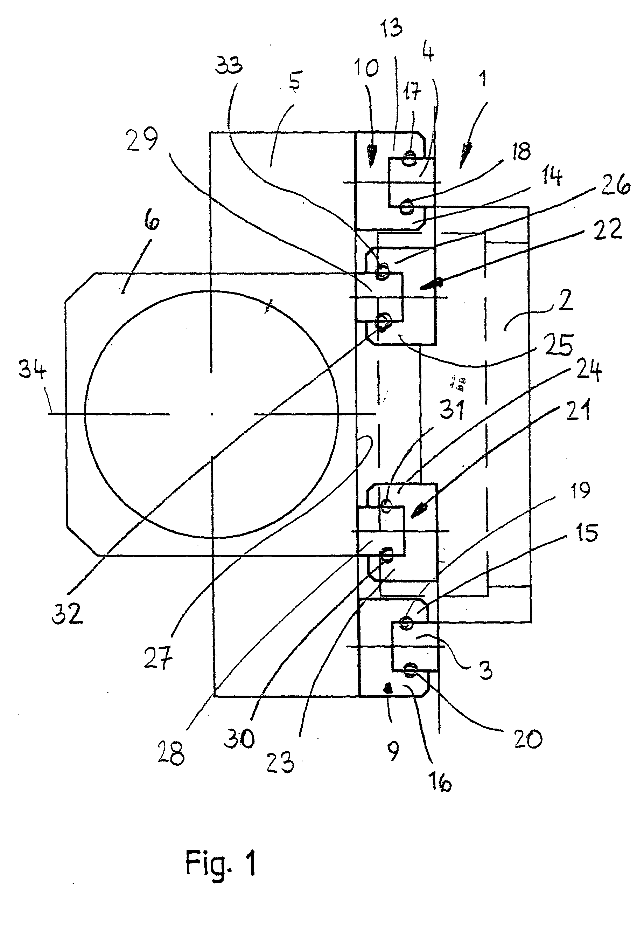

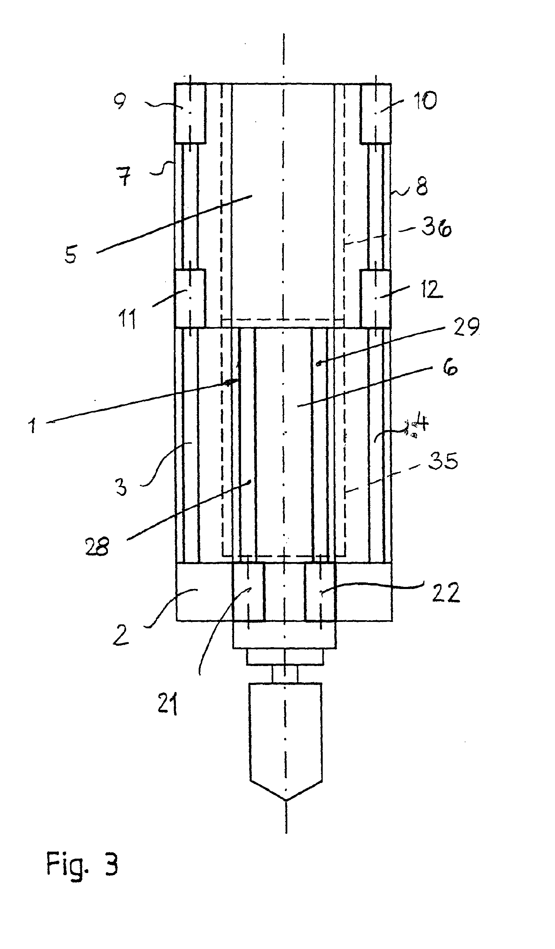

Bei der Ausführungsform gemäß den Fig. 1 bis 3 hat die Linearführung 1 ein als Führungsteil dienendes Gestell 2. Es ist beispielsweise Teil einer Werkzeugmaschine, kann aber auch allgemein im Werkzeugmaschinenbau eingesetzt werden. Das Gestell 2 weist zueinander parallele Schienen 3, 4 auf, auf denen ein Träger 5 verfahrbar ist. Er ist nur beispielhaft als Schlitten dargestellt, kann aber jede geeignete Ausbildung haben. Er trägt eine Pinole 6, die sich in Verfahrrichtung des Schlittens 5 erstreckt. Er hat rechteckigen Umriß (Fig. 3) und weist an seinen in Verfahrrichtung liegenden Enden an zwei einander gegenüberliegenden Längsseiten 7, 8 jeweils ein Führungslager 9, 10; 11, 12 auf. Wie sich aus Fig. 3 ergibt, sind diese Führungslager 9 bis 12 an der dem Gestell 2 zugewandten Unterseite in den Eckbereichen des Schlittens 5 vorgesehen und fest mit ihm verbunden. Wie sich aus Fig. 1 ergibt, haben die Führungslager U-förmigen Querschnitt. Mit ihren Schenkeln 13, 14; 15, 16 liegen die Führungslager an den Längsseiten der beiden Führungsschienen 3, 4 des Gestelles 2 an. Zwischen den Schenkeln 13 bis 16 der Führungslager 9 bis 12 und den Schienen 3, 4 befinden sich Wälzlager 17 bis 20, die ein leichtes Verfahren des Schlittens 5 längs des Gestelles 2 ermöglichen. Außerdem wird durch diese Wälzlager 17 bis 20 eine Formschlußverbindung zwischen den Führungslagern 9 bis 12 und den Schienen 3, 4 quer zur Verfahrrichtung des Schlittens 5 erreicht.

Das Gestell 2 ist mit zwei Führungslagern 21, 22 versehen, die wie die Führungslager 9 bis 12 U-förmigen Querschnitt haben. Die Schenkel 23, 24; 25, 26 der Führungslager 21, 22 sind entgegengesetzt zu den Schenkeln 13 bis 16 der Führungslager 9 bis 12 gerichtet. In Verschieberichtung des Schlittens 5 gesehen (Fig. 1) sind die Schenkel 23 bis 26 der gestellseitigen Führungslager 21, 22 gegen den Schlitten 5 gerichtet und enden mit geringem Abstand von der die Unterseite 27 des Schlittens 5 enthaltenden Ebene.

Die Schenkel 23 bis 26 der gestellseitigen Führungslager 21, 22 liegen an den Längsseiten zweier parallel zueinander liegender Führungsschienen 28, 29 an (Fig. 1), die an der dem Gestell 2 zugewandten Seite der Pinole 6 bzw. des Schlittens 5 befestigt sind. An den Längsseiten der Führungslager 21, 22 sind Wälzkörper 30 bis 33 vorgesehen, die zu einer leichten Verschiebbarkeit des Schlittens 5 beitragen und zudem quer zur Verschieberichtung eine Formschlußverbindung zwischen der Pinole 6 bzw. dem Schlitten 5 und dem Gestell 2 herstellen.

Der Abstand zwischen den gestellseitigen Führungsschienen 3, 4 ist größer als der Abstand der schlittenseitigen Führungsschienen 28, 29. Dementsprechend ist auch der Abstand zwischen den einander gegenüberliegenden schlittenseitigen Führungslagern 9 und 10 bzw. 11 und 12 größer als der Abstand zwischen den gestellseitigen Führungslagern 21, 22.

Die Führungsschienen 3, 4 und 28, 29 sowie die Führungslager 9 bis 12 und 21, 22 sind spiegelsymmetrisch zur Quermittelebene 34 der Antriebseinrichtung ausgebildet und angeordnet.

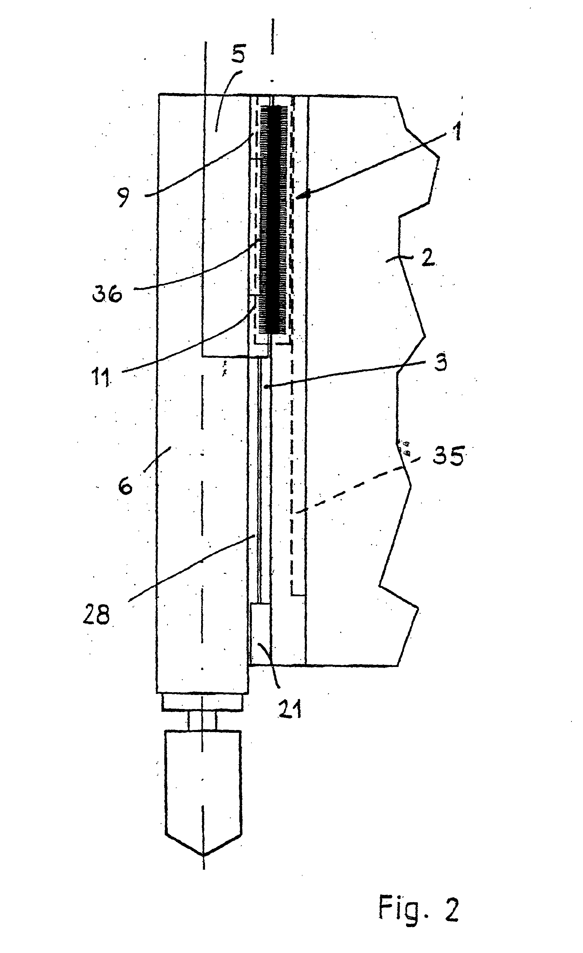

Im Gestell 2 befindet sich ein Sekundärteil 35 (Fig. 2) eines Linearmotors. Diesem Sekundärteil 35 ist ein schlittenseitiger Primärteil 36 zugeordnet.

Die Zeichnungen zeigen den Schlitten 5 mit der Pinole 6 in der am weitesten zurückgefahrenen Lage. Das Gestell 2 ist so ausgebildet, daß in dieser Stellung die Pinole 6 nur sehr wenig über das Gestell 2 ragt. Wird die Pinole 6 aus dieser Ausgangsstellung verschoben, so erfassen die magnetischen Anziehungskräfte des Sekundärteiles 35 des elektrischen Liniearmotors laufend kleiner werdende Längsabschnitte der Pinole 6, und in gleichem Maße werden die Biegekräfte reduziert. Zwischen dem Primär- und dem Sekundärteil 36, 35 wirken Magnetkräfte, die zusätzlich zu den Gewichts- und Bearbeitungskräften von den entsprechenden Führungslagern 9 bis 12, 21, 22 aufgenommen werden. Aufgrund der beschriebenen Anordnung und Ausbildung der Führungsschienen 3, 4; 28, 29 und der Führungslager 9 bis 12; 21, 22 werden die durch die Biegung infolge der Magnetkräfte hervorgerufenen Abweichungen von der geradlinigen Bewegung der Pinole 6 vollständig vermieden. Dies ist darauf zurückzuführen, daß das Gestell 2 und der Schlitten 5 jeweils Führungsschienen 3, 4; 28, 29 und Führungslager 9 bis 12; 21, 22 aufweisen, die mit den Führungsschienen zusammenwirken. Die aufeinander sitzenden Führungsschienen 3, 4; 28, 29 und Führungslager 9 bis 12; 21, 22 bilden Wirkpaare, die aufgrund der gegensinnigen Anordnung relativ zueinander verhindern, daß die über das Gestell 2 ragende Pinole 6 aufgrund der Magnetkräfte verformt bzw. gebogen wird. Dadurch ergibt sich eine sehr hohe Form- und Lagegenauigkeit.

Die Linearführung 1 wird bevorzugt im Maschinenbau, insbesondere im Werkzeugmaschinenbau, eingesetzt. So können mit derartigen Linearführungen 1 mit Linearantrieben 35, 36 Schnitt- und Vorschubbewegungen von Werkzeug- und Werkstückträgern ausgeführt werden. Aufgrund der hohen Biegesteifigkeit und der optimalen Form-und Lagegenauigkeit können mit Maschinen, die mit solchen Antrieben ausgestattet sind, sehr hohe Fertigungsgenauigkeiten erzielt werden.

Der Linearantrieb ist im dargestellten Ausführungsbeispiel so angeordnet, daß die Pinole 6 und damit das entsprechende Werkzeug in Vertikalrichtung verfahren werden kann. Selbstverständlich kann die Linearführung beispielsweise auch horizontal oder geneigt angeordnet sind. Das Gestell 2 ist allgemein eine Schlittenführung für den Schlitten 5 und muß selbstverständlich nicht gestellartig ausgebildet sein.

Beim Verfahren des Schlittens 5 bewegen sich die Führungslager 9 bis 12 sowie die Führungsschienen 28, 29 relativ zu den Führungsschienen 3, 4 und den Führungslagern 21, 22 des Gestelles 2.

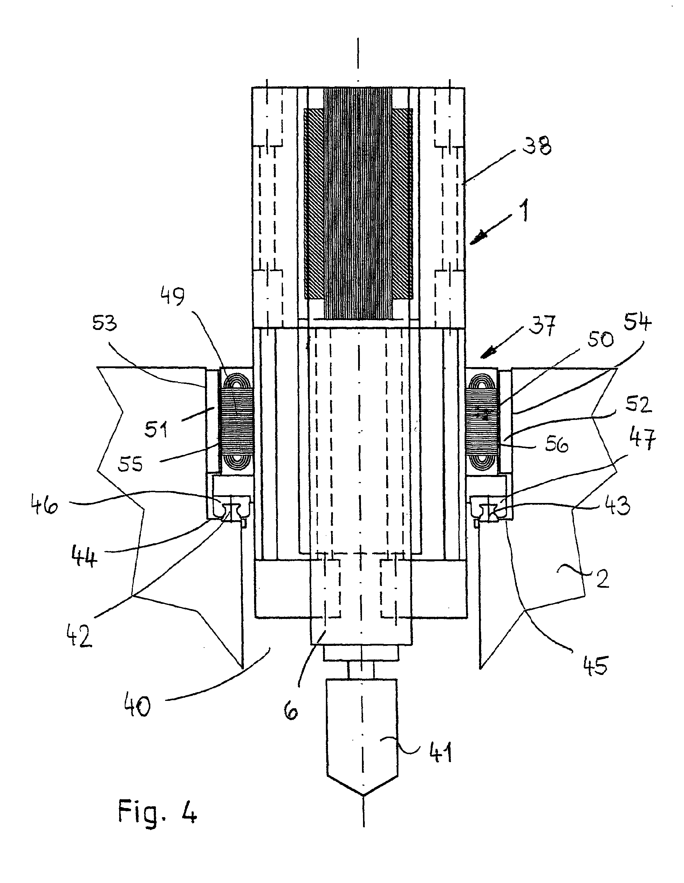

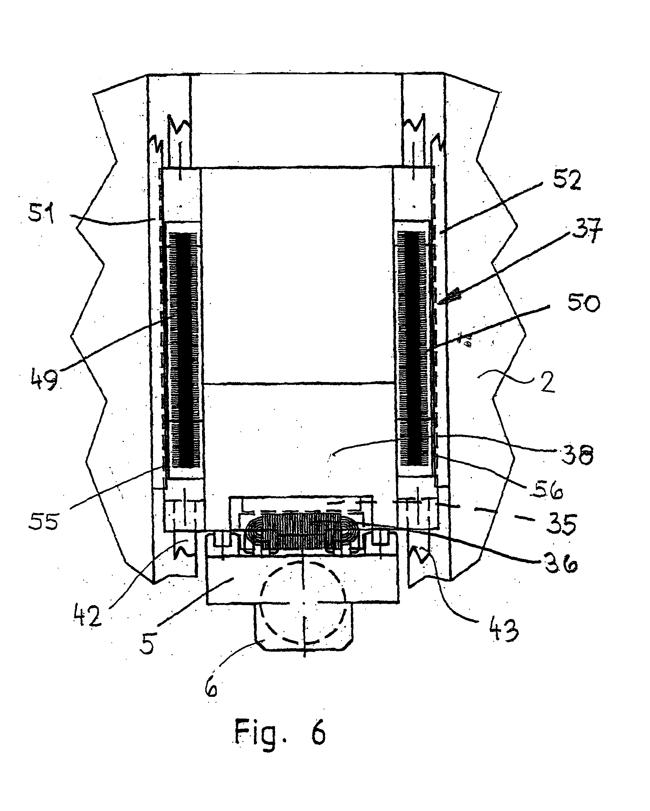

Bei der Ausführungsform gemäß den Fig. 4 bis 6 sind an der beispielhaft dargestellten Werkzeugmaschine zwei Linearführungen vorgesehen. Die Linearführung 1 entspricht der Ausführungsform nach den Fig. 1 bis 3 und ist im Beispielsfall vertikal angeordnet. Darüber hinaus hat die Werkzeugmaschine eine weitere, beispielhaft horizontal angeordnete Linearführung 37, die aber auch geneigt angeordnet sein kann. Im Unterschied zur Ausführungsform nach den Fig. 1 bis 3 ist die Linearführung 1 an der Stirnseite eines Schlittens 38 vorgesehen, der in Horizontalrichtung 39 mittels der Linearführung 37 auf dem Gestell 2 der Maschine verfahren werden kann. Wie Fig. 4 zeigt, ist das Gestell 2 am oberen Ende mit einer Durchbrechung 40 versehen, die so tief ist, daß die Pinole 6 mit dem entsprechenden Werkzeug 41 in Horizontalrichtung 39 mit dem Schlitten 38 auch in der am weitesten nach unten verfahrenen Stellung der Pinole 6 bzw. des Schlittens 5 verfahren werden kann.

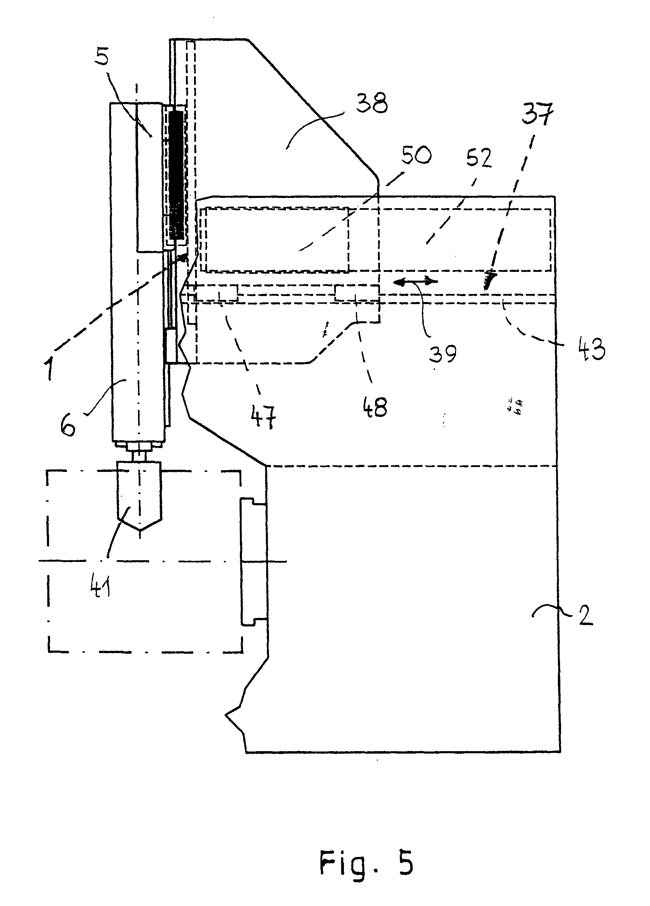

Wie Fig. 4 zeigt, wird der Schlitten 38 auf zwei parallel zueinander und in Verfahrrichtung 39 sich erstreckenden Führungsschienen 42, 43 abgestützt, die auf zwei Schulterflächen 44, 45 des Gestelles 2 befestigt sind. Vorteilhaft liegen die Schulterflächen 44, 45 in einer gemeinsamen Ebene. Sie können aber auch quer zur Verfahrrichtung 39 versetzt zueinander angeordnet sein. Der Schlitten 38 hat in Höhe der Führungsschienen 42, 43 rechteckigen Umriß und ist an den Eckbereichen mit Schuhen 46 bis 48 versehen, die die Führungsschienen 42, 43 an den Seiten übergreifen. Die Führungsschienen 42, 43 und die Schuhe 46 bis 48 sind im Querschnitt so ausgebildet, daß sie senkrecht zur Verfahrrichtung 39 einander formschlüssig übergreifen. Die Schuhe 46 bis 48 sind an den einander gegenüberliegenden Seitenwänden des Schlittens 38 in dessen Eckbereichen vorgesehen. Im Bereich oberhalb der Schuhe 46 bis 48 befindet sich jeweils ein Primärteil 49, 50 jeweils eines Linearmotors. Diesen beiden Primärteilen 49, 50 ist jeweils ein Sekundärteil 51, 52 zugeordnet, die an Seitenwänden 53, 54 des Gestelles 2 befestigt sind. Diese Seitenwände schließen rechtwinklig an die Schulterflächen 44, 45 an. Die Sekundärteile 51, 52 erstrecken sich nahezu über die gesamte Länge der Führungsschienen 42, 43 (Fig. 5).

Die zwischen den Primär- und den Sekundärteilen 49 bis 52 wirkenden magnetischen Anziehungskräfte können vom Schlitten 38 sowie vom Gestell 2 einwandfrei aufgenommen werden, ohne daß unzulässige Verformungen auftreten. Insbesondere bleibt der Bewegungsspalt 55, 56 zwischen den Primär- und den Sekundärteilen 49 bis 52 unverändert, so daß die Spaltverluste gering bleiben. Bei herkömmlichen Schlittenführungen, bei denen die Schlitten mit ihren Primärteilen die Schlittenführung U-förmig umgreifen, werden die Schenkel des Schlittens infolge der starken magnetischen Anziehungskräfte auf Biegung beansprucht und deformiert. Der im stromlosen Zustand rechteckige Querschnitt des Bewegungsspaltes zwischen den Primär-und den Sekundärteilen nimmt bei diesen bekannten Ausbildungen eine unerwünschte Keilform an, wodurch sich die Spaltverluste erhöhen. Bei der beschriebenen Ausbildung gemäß den Fig. 4 bis 6 wird eine solche unerwünschte Keilform zuverlässig vermieden, ohne daß eine besondere Materialverstärkung des Schlittens und/oder der Führungsschienen 42, 43 und/oder der Schuhe 46 bis 48 erforderlich ist. Dadurch hat der Schlitten 38 nur geringe Masse, so daß er, was für Werkzeugmaschinen von besonderer Bedeutung ist, rasch beschleunigt und abgebremst werden kann. Die beschriebene Ausbildung des Linearantriebs für den Schlitten 38 führt zu sehr günstigen dynamischen Verhältnissen, ohne daß hierzu ein großer Bau- und Kostenaufwand notwendig ist.

## Patentansprüche

1. Linearführung für elektrische Linearmotoren mit wenigstens einer an einem Führungsteil vorgesehenen Führungsschiene, längs der ein Träger verfahrbar ist,
**dadurch gekennzeichnet, daß** der Träger (5) wenigstens eine Führungsschiene (28, 29) aufweist, und daß das Führungsteil (2) und der Träger (5) jeweils wenigstens ein mit den Führungsschienen (3, 4; 28, 29) zusammenwirkendes Führungslager (9 bis 12; 21, 22) aufweisen.

2. Linearführung nach Anspruch 1,
**dadurch gekennzeichnet, daß** die Führungsschiene (3, 4) am Führungsteil (2) mit dem mit ihm zusammenwirkenden Führungslager (9 bis 12) des Trägers (5) einerseits und die Führungsschiene (28, 29) am Träger (5) und das mit ihr zusammenwirkende Führungslager (21, 22) des Führungsteils (2) andererseits jeweils ein Wirkpaar bilden.

3. Linearführung nach Anspruch 1 oder 2,
**dadurch gekennzeichnet, daß** die Führungsschienen (3, 4; 28, 29) und die vorteilhaft u-förmigen Querschnitt aufweisenden Führungslager (9 bis 12; 21, 22) quer zur Verfahrrichtung des Trägers (5) formschlüssig und/oder kraftschlüssig miteinander verbunden sind.

4. Linearführung nach Anspruch 3,
**dadurch gekennzeichnet, daß** die formschlüssige Verbindung zwischen den Führungsschienen (3, 4; 28, 29) und den Führungslagern (9 bis 12; 21, 22) durch Wälzlager (17 bis 20; 30 bis 33) gebildet ist.

5. Linearführung nach Anspruch 3 oder 4,
**dadurch gekennzeichnet, daß** die Schenkel (13 bis 16) der Führungslager (9 bis 12) des Trägers (5) entgegengesetzt zu den Schenkeln (23 bis 26) der Führungslager (21, 22) des Führungsteils (2) gerichtet sind.

6. Linearführung nach einem der Ansprüche 1 bis 5,
**dadurch gekennzeichnet, daß** der Träger (5) mindestens eine Pinole (6) trägt.

7. Linearführung nach einem der Ansprüche 1 bis 6,
**dadurch gekennzeichnet, daß** das Führungsteil (2) einen Sekundärteil (35) und der Träger (5) einen Primärteil (36) eines Linearmotors aufweisen.

8. Linearführung, insbesondere nach einem der Ansprüche 1 bis 7,
**dadurch gekennzeichnet, daß** keine mit Dauer- oder Elektromagneten bestückten Bauelemente in den Arbeitsraum eintauchen.

9. Linearführung nach einem der Ansprüche 1 bis 8,
**dadurch gekennzeichnet, daß** die Länge der Führungsschiene (28, 29) des Trägers (5) der Summe aus dem Hubweg des Trägers (5) und der Länge des Führungslagers (21, 22) entspricht.

10. Linearführung nach einem der Ansprüche 1 bis 9,
**dadurch gekennzeichnet, daß** das Führungsteil (2) zwei mit Abstand und parallel zueinander liegende Führungsschienen (3, 4) aufweist, und daß vorteilhaft der Träger (5) mit jeweils zwei, vorzugsweise mit Abstand hintereinander angeordneten Führungslagern (9 bis 13) auf den Führungsschienen (3, 4) des Führungsteils (2) gelagert ist.

11. Linearführung nach einem der Ansprüche 1 bis 10,
**dadurch gekennzeichnet, daß** der Träger (5) zwei mit Abstand und parallel zueinander liegende Führungsschienen (28, 29) aufweist, und daß vorteilhaft der Abstand zwischen den beiden Führungsschienen (28, 29) kleiner ist als der Abstand zwischen den beiden Führungsschienen (3, 4) des Führungsteils (2).

12. Linearführung nach Anspruch 11,
**dadurch gekennzeichnet, daß** die beiden Führungsschienen (28, 29) des Schlittens (5) im Bereich zwischen den beiden Führungsschienen (3, 4) des Führungsteils (2) liegen.

13. Linearführung nach einem der Ansprüche 7 bis 12,
**dadurch gekennzeichnet, daß** der Linearmotor (35, 36) im Bereich zwischen den Führungsschienen (3, 4) der Linearführung (1) angeordnet ist.

14. Linearführung für elektrische Linearmotoren mit wenigstens einer an einem Führungsteil vorgesehenen Führungsschiene, längs der ein Träger verfahrbar ist, insbesondere nach einem der Ansprüche 1 bis 13,
**dadurch gekennzeichnet, daß** das Führungsteil (2) den Träger (38) im Bereich der Linearführung (42, 43, 46 bis 48) umgreift, und daß das Primärteil (49, 50) am Führungsteil (2) oder am Träger (38) und das Sekundärteil (51, 52) am Träger (38) oder am Führungsteil (2) angeordnet ist.

15. Linearführung nach Anspruch 14,
**dadurch gekennzeichnet, daß** das Primär- oder das Sekundärteil (49 bis 52) an Seitenwänden des Trägers (38) vorgesehen sind.

16. Linearführung nach Anspruch 14 oder 15,
**dadurch gekennzeichnet, daß** das Führungsteil (2) mit Führungsschienen (42, 43) versehen ist, auf denen der Träger (38) mit Schuhen (46 bis 48) verschiebbar gelagert ist, die vorteilhaft die Führungsschienen (42, 43) formschlüssig übergreifen.

17. Linearführung nach einem der Ansprüche 14 bis 16,
**dadurch gekennzeichnet, daß** das Primär- und das Sekundärteil (49 bis 52) im Bereich neben der Linearführung (42, 43, 46 bis 48) angeordnet ist.

18. Linearführung nach einem der Ansprüche 1 bis 17,
**dadurch gekennzeichnet, daß** das Führungsteil (2) ein Gestell einer Werkzeugmaschine ist.

19. Linearführung nach einem der Ansprüche 1 bis 18,
**dadurch gekennzeichnet, daß** am Führungsteil (2) zwei winklig, vorzugsweise rechtwinklig zueinander liegende Linearantriebe vorgesehen sind.

20. Linearführung nach einem der Ansprüche 14 bis 19,
**dadurch gekennzeichnet, daß** der Träger (38) die Linearführung (1) aufweist und längs der winklig zu ihr liegenden weiteren Linearführung (42, 43, 46 bis 48) verfahrbar ist.

21. Linearführung nach einem der Ansprüche 18 bis 20,
**dadurch gekennzeichnet, daß** das Gestell (2) eine Durchbrechung (40) aufweist, in der die weitere Linearführung (42, 43, 46 bis 48) angeordnet ist.
